# EUROPÄISCHE PATENTSCHRIFT

(11) **EP 4 655 761 B1**
(45) Veröffentlichungstag und Bekanntmachung des Hinweises auf die Patenterteilung: **25.11.2026**
(21) Anmeldenummer: 23818346.1
(22) Anmeldetag: 04.12.2023
(51) Int. Cl.: G06V 10/44, G06V 10/82, G06V 10/774, G06V 20/56

(54) **VERFAHREN ZUR ERKENNUNG VON LINIENSTRUKTUREN IN BILDDATEN**
METHOD FOR RECOGNIZING LINE STRUCTURES IN IMAGE DATA
MÉTHODE DE RECONNAISSANCE DE STRUCTURES LINÉAIRES DANS DES DONNÉES D'IMAGE

(30) Priorität: 25.01.2023 DE 102023200571
(43) Veröffentlichungstag der Anmeldung: 03.12.2025
(73) Patentinhaber: Robert Bosch GmbH, 70442 Stuttgart (DE)
(72) Erfinder: JANAI, Joel, 71229 Leonberg (DE); WENZEL, Thomas, 22089 Hamburg (DE); KAPELNER, Tamas, 31139 Hildesheim (DE); SULTAN, Azhar, Kent TN2 3RR (GB)
(86) Internationale Anmeldenummer: PCT/EP2023/084107
(87) Internationale Veröffentlichungsnummer: WO 2024/156407

(56) Entgegenhaltungen:
- US-A- 4 970 653
- US-A1- 2016 171 316

## Beschreibung

Die vorliegende Erfindung betrifft ein Verfahren zur Erkennung von Linienstrukturen in Bilddaten und Bestimmen von dessen Verlauf. Darüber hinaus betrifft die Erfindung zusätzlich ein Verfahren zum Trainieren eines faltenden neuronalen Netzwerks zum Ermitteln einer Linienstruktur in Bilddaten und dessen Verlaufs. Die Erfindung wird durch die angehängten Ansprüche definiert.

### Stand der Technik

Im Zuge der zunehmenden Automatisierung von Fahrzeugfunktionen gewinnt eine Erkennung von Fahrbahnmarkierungen und linienartigen Strukturen in Bilddaten immer mehr an Bedeutung. Dabei ist es wichtig, dass verschiedene Fahrbahnmarkierungen korrekt und schnell durch das Fahrzeug erkannt werden können.

US 2016/171316 A1 (FRITSCH JANNIK [DE] ET AL) 16. Juni 2016 (2016-06-16), offenbart ein Verfahren um eine Belegungskarte zu bestimmen. Die DE 10 2004 057 188 A1 offenbart eine Vorrichtung zum Unterstützen eines Fahrens eines Fahrzeugs. Die vordere Szenerie eines Fahrzeugs wird von einer CCD-Kamera als eine Abbildung abgebildet. Die Anzahl von Bildelementen in jeder horizontalen Zeile, die zum Fahren des Fahrzeugs erforderlich ist, wird gespeichert und es wird auf der Grundlage eines Verhältnisses der Anzahl von Bildelementen der Straße, an denen in der Abbildung kein Fahrzeug parkt, zu der Anzahl von Bildelementen von jeder horizontalen Zeile auf der Grundlage der Breite des Fahrzeugs bestimmt, ob das Fahrzeug an einem parkenden Fahrzeug vorbeifahren kann.

In der EP 3 410 398 A1 ist ein System zur Erkennung von Straßeninformationen offenbart, das in der Lage ist, die Positionen von Fahrspurmarkierungen auf der anderen Seite einer Fahrspur nach einem Fahrspurwechsels zu bestimmen. Das System umfasst dabei ein Mittel zur Erkennung einer vorderen Fahrspurmarkierung, ein Mittel zur Erkennung einer seitlichen Fahrspurmarkierung und ein Mittel zum Schätzen der vorderen Fahrspurmarkierungen, die sich auf der anderen Seite der Fahrspur nach einem Fahrspurwechsel befinden.

Die der Erfindung zugrunde liegende Aufgabe liegt darin, ein Verfahren anzugeben, mit welchem Linienstrukturen in Bilddaten erkannt und dessen Verlauf bestimmt werden kann, und mit welchem zudem Linienabschnitte begrenzter Länge verbessert erkannt werden können.

Die Aufgabe wird gelöst durch ein Verfahren zur Erkennung von Linienstrukturen in Bilddaten und Bestimmen von dessen Verlauf mit den Merkmalen des Anspruchs 1. Des Weiteren gibt die Erfindung ein Verfahren zum Trainieren eines faltenden neuronalen Netzwerks mit den Merkmalen von Anspruch 6 an. Bevorzugte Ausführungsformen sind den abhängigen Ansprüchen zu entnehmen.

### Offenbarung der Erfindung

Die Erfindung gibt ein Verfahren zur Erkennung von Linienstrukturen in Bilddaten und Bestimmen von dessen Verlauf an. Unter Linienstrukturen werden Körperkanten von dreidimensionalen Körpern oder Markierungslinien wie beispielsweise Fahrbahnmarkierungen verstanden. Unter Bilddaten werden sowohl 2D als auch 3D Bilder verstanden. Das Verfahren umfasst dabei die Schritte des Erfassens von Bilddaten mittels eines Bildsensors, und des Einteilens der gesamten Bilddaten in eine Vielzahl an Zellen und zuordnen wenigstens einer vordefinierten und ausgerichteten Linie fester Länge zu jeder Zelle. Die Bilddaten werden dabei mit dem Bildsensor erfasst, welcher vorteilhafterweise ein Kamera-, ein Lidar- oder ein Radarsensor ist. Gemäß der Erfindung wird unter einer Linie nicht ausschließlich eine gerade Linie verstanden. Entsprechend umfasst der Begriff Linie auch gebogene Linien beziehungsweise Kurven.

Um Linienstrukturen in allen Raumrichtungen erkennen zu können, werden den Zellen vorteilhafterweise eine Vielzahl an verschieden ausgerichteter Linien fester Länge zugeordnet. Um jedoch lediglich Linienstrukturen einer bestimmten Ausrichtung zu detektieren, ist es vorteilhaft lediglich eine Linie zu verwenden, welche die zu detektierende Richtung aufweist. Durch das Vorgeben von Linien fester Länge ist es möglich Linienabschnitte einer Linienstruktur erkennen zu können. Über jede Linie kann dadurch ein Linienabschnitt der Linienstruktur abgebildet werden. Entsprechend ist es möglich, beispielsweise eine gestrichelte Fahrspurlinie erkennen zu können, so dass durchgezogene Fahrspurlinien von gestrichelten Fahrspurlinie unterschieden werden können. Auch kann die Position der Striche in der gestrichelten Linie erkannt werden. Die Erkennung und Unterscheidung verschiedener Linienstrukturen wird dadurch verbessert.

In weiteren Verfahrensschritten wird die wenigstens eine Linie in eine vorbestimmte Anzahl an Liniensegmente aufgeteilt, zu der wenigstens einen Linie jeder Zelle wird ein Wahrscheinlichkeitswert für das Vorliegen einer Linienstruktur berechnet, Verschiebungswerte von Anfangs- und Endpunkten der Liniensegmente zu einer potentiellen Linienstruktur berechnet, und alle Linien verworfen die unterhalb eines vordefinierten Wahrscheinlichkeitsschwellwertes sind. Als Liniensegment wird dabei ein Teilbereich der Linie fester Länge verstanden. Die Liniensegmente können dabei alle die gleiche oder unterschiedliche Längen aufweisen. Jedes Liniensegmente weist einen Anfangspunkt und einen Endpunkt auf, welche mit Anfangs- beziehungsweise Endpunkten benachbarter Liniensegmente zusammenfallen.

Als Wahrscheinlichkeitswert wird dabei ein Wert verstanden, welcher sowohl angibt, ob generell eine Linienstruktur vorliegt. Über den Wahrscheinlichkeitswert können somit die verschiedenen Linien gewichtet werden, so dass ein Kriterium vorhanden ist, nach welchem entschieden werden kann, von welcher Linie für die Repräsentation der Linienstruktur ausgegangen werden soll. Durch Vorgeben eines Wahrscheinlichkeitsschwellwertes, können Linien mit einem niedrigen Wahrscheinlichkeitswert bereits im Vorfeld verworfen werden. Dadurch kann der Rechenaufwand im weiteren Verfahren wesentlich reduziert werden.

Zusätzlich werden die Wahrscheinlichkeitswerte und die Verschiebungswerte der übrigen Linien in eine Berechnungsfunktion eingegeben und Linien, welche der Linienstruktur am ähnlichsten sind, ausgegeben, und aus den verbleibenden Linien und den zugehörigen Verschiebungswerten wenigstens ein Teilverlauf der Linienstrukturen bestimmt, wobei alle Teilverläufe einen Gesamtverlauf der Linienstrukturen angeben. Die Berechnungsfunktion ist dabei beispielsweise ein Algorithmus, welcher anhand der Wahrscheinlichkeitswerte und der Verschiebungswerte die Linie auswählt, welche am ehesten der Linienstruktur entspricht. Diese ausgewählten Linien sind dabei der Beste Startpunkt von dem ausgegangen wird, um zu dem tatsächlichen Verlauf der Linienstruktur zu gelangen. Durch Anwenden der Verschiebungswerte auf die Linien wird der wahre Verlauf der Linienstruktur erhalten. Da jede Linie lediglich einen Teilverlauf eines Gesamtverlaufs der Linienstruktur angibt, ist es dadurch auch möglich, Unterbrechungen in der Linienstruktur darzustellen, um beispielsweise eine gestrichelte Fahrspurmarkierung und die genaue Position der Teilstriche zu erkennen.

In einer bevorzugten Ausführung der Erfindung werden die Schritte mittels einem trainierten faltenden neuronalen Netzwerk durchgeführt. Durch ein trainiertes faltendes neuronales Netzwerk wird aufgrund von Trainingsbeispielen ein generalisiertes Modell erstellt. Nach einem Training kann somit mit einem solchen Netzwerk schnell und einfach ein tatsächlicher Verlauf einer Linienstruktur detektiert werden. Dies kann dabei insbesondere dauerhaft während beispielsweise einer Fahrt, zur Erkennung von Fahrspurmarkierungen, durchgeführt werden.

In einer weiteren bevorzugten Ausführung der Erfindung wird zusätzlich zu den Wahrscheinlichkeitswerten und den Verschiebungswerten ein Längenpassungswert berechnet, über welchen die Linie fester Länge in ihrer Länge entsprechend der Linienstrukturen angepasst wird. Ein Längenanpassungswert ist dabei ein Faktor, um welchen jedes Liniensegment verlängert oder verkürzt werden muss, um zu der Länge der Linienstruktur zu gelangen. Es ist dadurch möglich, jede Linie entsprechend Länge der Linienstruktur anzupassen. Strichabschnitte einer gestrichelten Linie können dadurch über das Verfahren mit der korrekten Länge dargestellt werden.

Vorzugsweise wird die Linien fester Länge in Form einer Parameter Funktion angegeben. Durch Angeben einer Linie in einer Parameter-Funktion kann diese einfacher beschrieben werden. Zusätzlich ist es möglich durch Verändern weniger Parameter der Funktion eine Vielzahl an Linien zu generieren, welche sich trotz alledem durch die gleiche Parameter Funktion darstellen lassen. Eine Durchführung des Verfahrens wird dadurch vereinfacht und beschleunigt.

In einer vorteilhaften Weiterbildung wird für die Berechnungsfunktionen zumindest eine Nicht-Maxima-Unterdrückungs Funktion verwendet. Bei einer Nicht-Maxima-Unterdrückungs Funktion (non-maximum suppression), wird insbesondere von dem höchsten Wahrscheinlichkeitswert ausgegangen. Von den noch übrigen Linien, wird von den Linien, die gemäß einer Ähnlichkeitsfunktion in der Nicht-Maxima-Unterdrückung gruppiert werden, lediglich die Linie behalten, welche den höchsten Wahrscheinlichkeitswert aufweist. Dadurch ist es somit möglich auch mehrere Linienstrukturen in einem Bild zu erkennen.

Die Erfindung gibt zusätzlich ein Verfahren zum Trainieren eines faltenden neuronalen Netzwerks zum Ermitteln einer Linienstruktur und dessen Verlaufs an. In einem ersten Schritt werden Trainingsdaten, umfassend wenigstens Sensordaten mit wenigstens einer Linienstruktur mit bekanntem Verlauf, für die Wahrscheinlichkeitswerte und Verschiebungswerte vorgegeben sind, eingegeben. Der vom faltenden neuronalen Netzwerk gemäß dem erfindungsgemäßen Verfahren ermittelten Wahrscheinlichkeitswerte und der Verschiebungswerte wird mit den vorgegebenen Wahrscheinlichkeitswerten und Verschiebungswerten verglichen. Abweichungen werden mit einer Kostenfunktion bewertet. Parameter, die das Verhalten des Modells charakterisieren werden mit dem Ziel geändert, dass bei weiterer Verarbeitung von Trainingsdaten durch das faltende neuronale Netzwerk die Bewertung durch die Kostenfunktionen voraussichtlich verbessert wird, und Freigeben dieser Parameter, falls ein ermittelter Genauigkeitswert einen vorbestimmten Wert erreicht.

Vorteilhafterweise wird das faltende neuronale Netzwerk trainiert, einen Längenanpassungswert der Linie fester Länge in Bezug auf die Linienstruktur abzuschätzen. Durch das zusätzliche Training der Längenanpassungswerte, können diese durch das Verfahren genauer bestimmt werden. Entsprechend werden die bereits zuvor beschriebenen Vorteile erzielt.

Die der Erfindung zugrunde liegende Aufgabe wird zusätzlich gelöst durch ein Steuergerät, welches eingerichtet ist, das erfindungsgemäße Verfahren durchzuführen.

Das zuvor beschriebene Verfahren kann insbesondere beispielsweise computerimplementiert und somit in einer Software verkörpert sein. Die Erfindung bezieht sich daher auch auf ein Computerprogramm mit maschinenlesbaren Anweisungen, die, wenn sie auf einem oder mehreren Computern ausgeführt werden, den oder die Computer dazu veranlassen, das beschriebene Verfahren auszuführen.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Ein solches Computerprogramm kann auf einem oder mehreren Computern, welche beispielsweise in einer Cloud angeordnet sind, betrieben werden. Über einen solchen in der Cloud betriebenen Computer werden die zu dem Verfahren genannten Vorteile erzielt.

Ausführungsbeispiele der Erfindung sind in der Zeichnung dargestellt und in der nachfolgenden Beschreibung näher erläutert. Es zeigt:
- Figur 1: Bild einer Fahrbahn, welches über eine Kamera erfasst wurde,
- Figur 2: Darstellung eines Verfahrens zur Erkennung von Linienstrukturen und Bestimmen von dessen Verlauf,
- Figur 3: Abbildung einer in Liniensegmente eingeteilten vordefinierten Linien und eine Linienstruktur vor einer Längenanpassung,
- Figur 4: Abbildung einer in Liniensegmente eingeteilten vordefinierten Linien und eine Linienstruktur nach einer Längenanpassung, und
- Figur 5: Darstellung eines Verfahrens zum Trainieren eines faltenden neuronalen Netzwerks nach einem Ausführungsbeispiel der Erfindung.

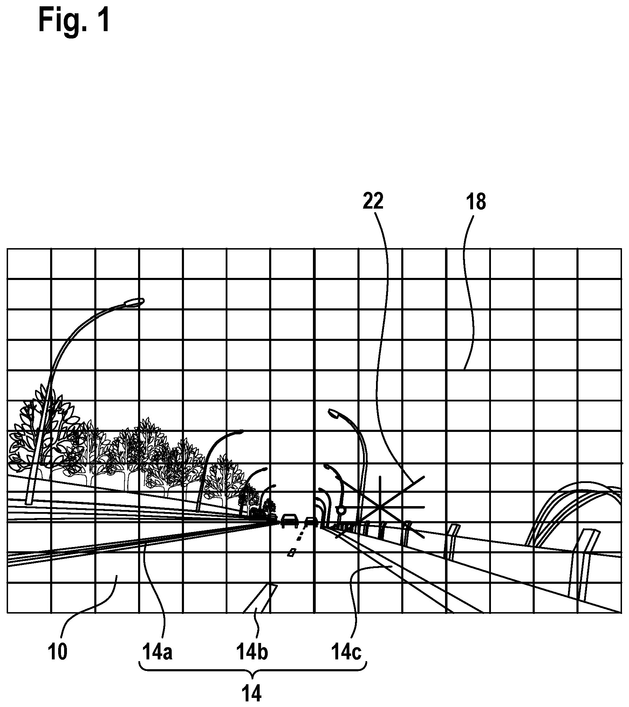

In Figur 1 ist ein Bild einer Fahrbahn 10 gezeigt, welches über eine Kamera eines Kraftfahrzeuges erfasst wurde. Das Bild zeigt als Linienstrukturen 14, beispielsweise eine durchgezogene Fahrbahnmarkierung 14a, eine gestrichelte Fahrbahnmarkierung 14b und eine Bürgersteigkante 14c. Für das erfindungsgemäße Verfahren wurde das Bild in eine Vielzahl an Zellen 18 eingeteilt. Anhand einer Zelle 18 ist gezeigt, dass dieser eine Mehrzahl an unterschiedlich ausgerichteter Linien 22 fester Länge zugeordnet sind. Obwohl dies lediglich für eine Zelle 18 gezeigt ist, weisen alle Zellen 18 diese Linien 22 auf.

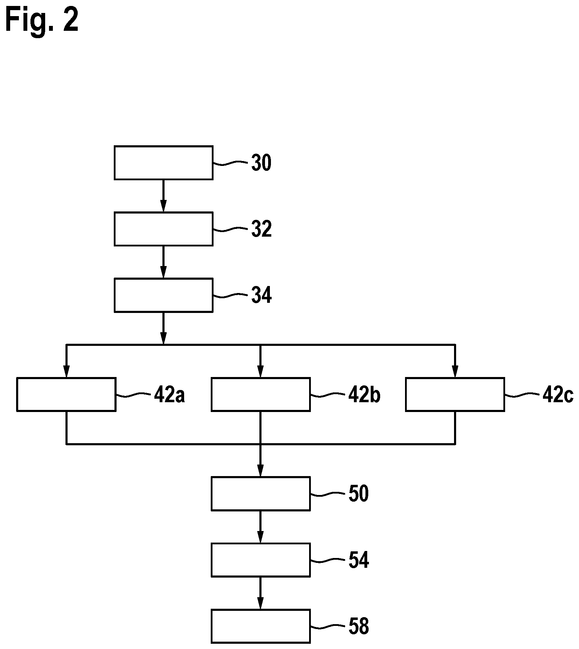

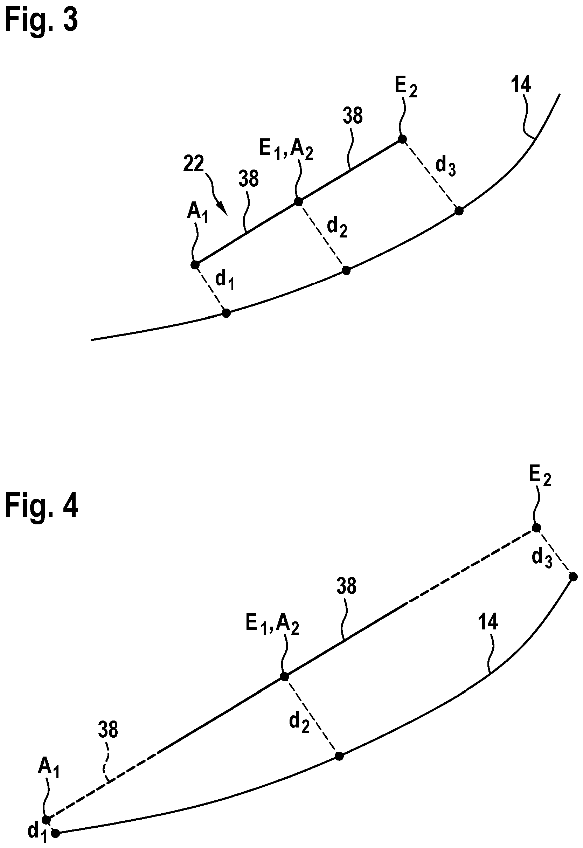

Figur 2 zeigt eine Darstellung eines Verfahrens zur Erkennung von Linienstrukturen 14 und Bestimmen von dessen Verlauf. In einem ersten Schritt 30 des Verfahrens wird ein Bild einer Fahrbahn 10 erfasst. Anschließend wird das Bild, beziehungsweise die Bilddaten, wie in Figur 1 gezeigt ist, in eine Vielzahl an Zellen 18 eingeteilt 32. Jeder Zelle 18 werden dabei, wie anhand einer in Figur 1 dargestellten Zelle 18 gezeigt ist, Linien 22 zugeordnet. Diese Linien 22 sind dabei verschieden ausgerichtet und weisen eine feste Länge auf. In einem darauf folgenden Schritt 34 werden die Linien 22 in eine vorbestimmte Anzahl an Liniensegmenten 38 aufgeteilt. Figur 3 zeigt dabei eine Linie 22, welche in zwei gleich lange Liniensegmente 38 aufgeteilt ist.

In einem nächsten Verfahrensschritt 42a wird zu jeder Linie 22 jeder Zelle 18 ein Wahrscheinlichkeitswert für das Vorliegen einer Linienstruktur 14 in der entsprechenden Zelle 18 berechnet. Gleichzeitig dazu, wird wie in Figur 3 dargestellt ist, jeweils ein Verschiebungswert dₙ zu einer potentiellen Linienstruktur 14 berechnet 42b. Der Verschiebungswert dₙ kann, wie in dem Ausführungsbeispiel gezeigt ist, ein orthogonaler Abstand der Linie 22 zu der Linienstruktur 14 sein. Die Verschiebungswerte dₙ werden dabei jeweils von Anfangs- und Endpunkten Aₙ, Eₙ der Liniensegmente 38 berechnet. Zusätzlich zu den Verschiebungswerten dₙ und den Wahrscheinlichkeitswerten wird gleichzeitig ein Längenanpassungswert berechnet 42c. Wie in Figur 4 gezeigt ist, wird die Länge der Liniensegmente 38 derart verlängert, dass die Linie 22 der Länge der Linienstruktur 14 entspricht. Die Verschiebungswerte dₙ der neuen Anfangs- und Endpunkte Aₙ, Eₙ werden dabei dementsprechend angepasst.

Um den Rechenaufwand zu reduzieren werden in einem folgenden Schritt 50 alle Linien 22 verworfen, deren Wahrscheinlichkeitswert unterhalb eines Wahrscheinlichkeitsschwellwert liegen. Die Wahrscheinlichkeitswerte und die Verschiebungswerte dₙ der übrigen Linien 22 werden anschließend in eine Berechnungsfunktion eingegeben 54. Die Berechnungsfunktion berechnet dabei Linien 22, welche der Linienstruktur 14 am ähnlichsten ist. Falls keine Linienstruktur 14 in dem Bild vorliegen sollte, würde entsprechend keine Linie 22 ausgegeben. Ebenso könnten beim Vorliegen mehrerer Linienstrukturen 14 auch mehrere Linien 22 ausgegeben werden. Anschließend wird aus den verbleibenden Linie 22 und den zugehörigen Verschiebungswerten dₙ wenigstens ein Teilverlauf der Linienstruktur 14 bestimmt 58, wobei alle Teilverläufe einen Gesamtverlauf der Linienstruktur 14 angeben.

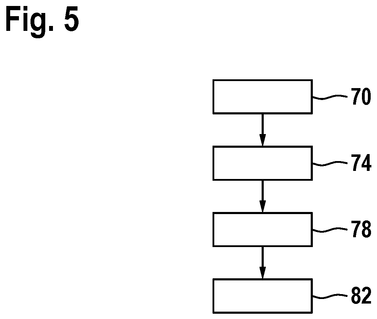

In Figur 5 ist eine Darstellung eines Verfahrens zum Trainieren eines faltenden neuronalen Netzwerks nach einem Ausführungsbeispiel der Erfindung gezeigt. Das faltende neuronale Netzwerk wird mit diesem Verfahren trainiert, so dass dieses Netzwerk das Verfahren nach Figur 2 ausführen kann. In einem ersten Schritt 70 werden Trainingsdaten in das faltende neuronale Netzwerk eingegeben. Die Trainingsdaten umfassen wenigstens Bilddaten mit wenigstens einer Linienstruktur 14 mit bekanntem Verlauf. Für diese Wahrscheinlichkeitswerte und die Verschiebungswerte dₙ für diese Linienstruktur 14 sind dabei vorgegeben.

Gemäß dem Verfahren nach Figur 2 werden in einem nächsten Schritt 74 die Wahrscheinlichkeitswerte, die Verschiebungswerte dₙ und die Längenanpassungswerte berechnet. Diese werden anschließend mit den vorgegebenen Wahrscheinlichkeitswerten, den vorgegebenen Verschiebungswerten dₙ und den vorgegebenen Längenanpassungswerten verglichen 78. Zu jeden dieser Werte wird eine Abweichung zu den vorgegebenen Werten berechnet. Diese Abweichung wird in einem nächsten Schritt 82 über eine Kostenfunktion bewerten. Anschließend werden Parameter, die das Verhalten des Modells charakterisieren mit dem Ziel geändert, dass bei weiterer Verarbeitung von Trainingsdaten durch das faltende neuronale Netzwerk die Bewertung durch die Kostenfunktionen voraussichtlich verbessert wird. Dies wird entsprechend so lange durchgeführt, bis ein ermittelter Genauigkeitswert für die Ermittlung der Wahrscheinlichkeitswerte, der Verschiebungswerte dₙ und der Längenanpassungswerte einen vorbestimmten Wert erreicht. Dieser Wert ist vorteilhafterweise ein Grenzwert einer Lernkurve, nachdem nach weiteren Durchläufen keine weiter oder wesentliche Verbesserung erzielt wird.

## Patentansprüche

1. Verfahren zur Erkennung von Linienstrukturen (14) in Bilddaten und Bestimmen von dessen Verlauf, umfassend die Schritte:
- Erfassen (30) von Bilddaten mittels eines Bildsensors,
- Einteilen (32) der gesamten Bilddaten in eine Vielzahl an Zellen (18) und zuordnen wenigstens einer vordefinierten und ausgerichteten Linie (22) fester Länge zu jeder Zelle (18),
- Aufteilen (34) der wenigstens einen Linie (22) in eine vorbestimmte Anzahl an Liniensegmente (38),
- Berechnen (42a) eines Wahrscheinlichkeitswerts für das Vorliegen einer Linienstruktur (14) zu jeder Linie (22) jeder Zelle (18), wobei die Wahrscheinlichkeitswerte mittels eines trainierten faltenden neuronalen Netzwerks berechnet werden,
- Berechnen (42b) von Verschiebungswerte (dₙ) von jeweils Anfangs- und Endpunkten (Aₙ, Eₙ) der Liniensegmente (38) zu einer potentiellen Linienstruktur (14),
- Verwerfen (50) aller Linien (22) die unterhalb eines vordefinierten Wahrscheinlichkeitsschwellwertes sind,
- Eingeben (54) der Wahrscheinlichkeitswerte und der Verschiebungswerte (dₙ) der übrigen Linien (22) in eine Berechnungsfunktion und Ausgeben von Linien (22), welche der Linienstruktur (14) am ähnlichsten sind,
- Bestimmen (58) wenigstens eines Teilverlaufs der Linienstruktur (14)aus den verbleibenden Linie (22) und den zugehörigen Verschiebungswerten (dₙ), wobei der Verlauf der Linienstruktur (14) erhalten wird, indem die Verschiebungswerte (dₙ) auf die Linie (22) angewendet werden, und wobei alle Teilverläufe einen Gesamtverlauf der Linienstruktur (14) angeben.

2. Verfahren nach Anspruch 1, **dadurch gekennzeichnet, dass** zusätzlich zu den Wahrscheinlichkeitswerten und den Verschiebungswerten (dₙ) ein Längenpassungswert berechnet wird (42c), über welchen die Linie (22) fester Länge in ihrer Länge entsprechend der Linienstrukturen (14) angepasst wird.

3. Verfahren nach einem der vorherigen Ansprüche, **dadurch gekennzeichnet, dass** die Linien (22) fester Länge in Form einer Parameter Funktion angegeben werden.

4. Verfahren nach einem der vorherigen Ansprüche, **dadurch gekennzeichnet, dass** für die Berechnungsfunktionen zumindest eine Nicht-Maxima-Unterdrückungs Funktion verwendet wird.

5. Verfahren zum Trainieren eines faltenden neuronalen Netzwerks zum Ermitteln einer Linienstruktur (14) in Bilddaten und dessen Verlaufs, umfassend die Schritte:
- Eingeben (70) von Trainingsdaten, umfassend wenigstens Bilddaten mit wenigstens einer Linienstruktur (14) mit bekanntem Verlauf, für die Wahrscheinlichkeitswerte und Verschiebungswerte (dₙ) vorgegeben sind,
- Vergleich (74) der vom faltenden neuronalen Netzwerk gemäß einem der vorherigen Ansprüche ermittelten Wahrscheinlichkeitswerte und der Verschiebungswerte (dₙ) mit den vorgegebenen Wahrscheinlichkeitswerten und Verschiebungswerten (dₙ),
- Bewerten (78) der Abweichungen mit einer Kostenfunktion,
- Parameter, die das Verhalten des Modells charakterisieren mit dem Ziel ändern (82), dass bei weiterer Verarbeitung von Trainingsdaten durch das faltende neuronale Netzwerk die Bewertung durch die Kostenfunktionen voraussichtlich verbessert wird, und Freigeben dieser Parameter, falls ein ermittelter Genauigkeitswert einen vorbestimmten Wert erreicht.

6. Verfahren nach Anspruch 5, **dadurch gekennzeichnet, dass** das faltende neuronale Netzwerk trainiert wird, einen Längenanpassungswert (dₙ) der Linie (22) fester Länge in Bezug auf die Linienstruktur (14) abzuschätzen.

7. Steuereinheit eines Kraftfahrzeugs zum Durchführen der Schritte eines Verfahrens nach einem der vorherigen Ansprüche.

8. Computerprogramm, enthaltend maschinenlesbare Anweisungen, die, wenn sie auf einem oder mehreren Computern ausgeführt werden, den oder die Computer dazu veranlassen, ein Verfahren nach einem der Ansprüche 1 bis 6 auszuführen.

9. Maschinenlesbarer Datenträger und/oder Downloadprodukt mit dem Computerprogramm nach Anspruch 8.

10. Computer, ausgerüstet mit dem Computerprogramm nach Anspruch 8, und/oder mit dem maschinenlesbaren Datenträger und/oder Downloadprodukt nach Anspruch 9.

## Claims

1. Method for recognizing line structures (14) in image data and determining the course thereof, comprising the steps of:
- capturing (30) image data by means of an image sensor,
- dividing (32) the entire image data into a multiplicity of cells (18) and assigning at least one predefined and oriented line (22) of fixed length to each cell (18),
- splitting (34) the at least one line (22) into a predetermined number of line segments (38),
- calculating (42a) a probability value for the presence of a line structure (14) with respect to each line (22) of each cell (18), wherein the probability values are calculated by means of a trained convolutional neural network,
- calculating (42b) displacement values (dₙ) of respective start and end points (Aₙ, Eₙ) of the line segments (38) with respect to a potential line structure (14),
- discarding (50) all lines (22) which are below a predefined probability threshold value,
- inputting (54) the probability values and the displacement values (dₙ) of the other lines (22) into a calculation function and outputting lines (22) which are the most similar to the line structure (14),
- determining (58) at least one partial course of the line structure (14) from the remaining line (22) and the associated displacement values (dₙ), wherein the course of the line structure (14) is obtained by applying the displacement values (dₙ) to the line (22), and wherein all partial courses specify an overall course of the line structure (14).

2. Method according to Claim 1, **characterized in that**, in addition to the probability values and the displacement values (dₙ), a length fit value is calculated (42c), by means of which the line (22) of fixed length is adapted in terms of its length in accordance with the line structures (14).

3. Method according to one of the preceding claims, **characterized in that** the lines (22) of fixed length are specified in the form of a parameter function.

4. Method according to one of the preceding claims, **characterized in that** at least one non-maximum suppression function is used for the calculation functions.

5. Method for training a convolutional neural network for ascertaining a line structure (14) in image data and the course thereof, comprising the steps of:
- inputting (70) training data, comprising at least image data having at least one line structure (14) with a known course, for which probability values and displacement values (dₙ) are predefined,
- comparing (74) the probability values ascertained by the convolutional neural network according to one of the preceding claims and the displacement values (dₙ) with the predefined probability values and displacement values (dₙ),
- evaluating (78) the deviations with a cost function,
- changing (82) parameters which characterize the behaviour of the model with the aim that, during further processing of training data by the convolutional neural network, the evaluation by means of the cost functions is expected to be improved, and enabling these parameters if an ascertained accuracy value reaches a predetermined value.

6. Method according to Claim 5, **characterized in that** the convolutional neural network is trained to estimate a length adaptation value (dₙ) of the line (22) of fixed length in relation to the line structure (14).

7. Control unit of a motor vehicle for carrying out the steps of a method according to one of the preceding claims.

8. Computer program, containing machine-readable instructions which, when executed on one or more computers, cause the computer(s) to carry out a method according to one of Claims 1 to 6.

9. Machine-readable data carrier and/or download product comprising the computer program according to Claim 8.

10. Computer, equipped with the computer program according to Claim 8, and/or with the machine-readable data carrier and/or download product according to Claim 9.

## Revendications

1. Procédé destiné à identifier des structures linéaires (14) dans des données d'image et à définir leur tracé, comprenant les étapes :
- détection (30) de données d'image au moyen d'un capteur d'image,
- répartition (32) des données d'image entières dans une pluralité de cellules (18) et association d'au moins une ligne (22) prédéfinie et alignée de longueur fixe à chaque cellule (18),
- division (34) de l'au moins une ligne (22) en un nombre prédéfini de segments linéaires (38),
- calcul (42a) d'une valeur de probabilité de la présence d'une structure linéaire (14) à chaque ligne (22) de chaque cellule (18), les valeurs de probabilités étant calculées au moyen d'un réseau neuronal convolutif entraîné,
- calcul (42b) de valeurs de déplacement (dₙ) respectivement de points de début et de fin (Aₙ, Eₙ) des segments linéaires (38) par rapport à une structure linéaire potentielle (14),
- rejet (50) de toutes les lignes (22) en dessous d'une valeur de seuil de probabilité prédéfinie,
- entrée (54) des valeurs de probabilité et des valeurs de déplacement (dₙ) des lignes (22) restantes dans une fonction de calcul et production de lignes (22) les plus similaires à la structure linéaire (14),
- définition (58) d'au moins un tracé partiel de la structure linéaire (14) à partir de la ligne (22) restante et des valeurs de déplacement (dₙ) associées, le tracé de la structure linéaire (14) étant obtenu en appliquant les valeurs de déplacement (dₙ) sur la ligne (22), et tous les tracés partiels indiquant un tracé global de la structure linéaire (14).

2. Procédé selon la revendication 1, **caractérisé en ce qu'**en plus des valeurs de probabilité et des valeurs de déplacement (dₙ), une valeur d'ajustement de longueur est calculée (42c), par laquelle la ligne (22) de longueur fixe est adaptée en longueur conformément aux structures linéaires (14).

3. Procédé selon l'une des revendications précédentes, **caractérisé en ce que** les lignes (22) de longueur fixe sont indiquées sous la forme d'une fonction de paramètre.

4. Procédé selon l'une des revendications précédentes, **caractérisé en ce qu'**au moins une fonction de suppression des non-maxima est utilisée pour les fonctions de calcul.

5. Procédé d'entraînement d'un réseau neuronal convolutif pour déterminer une structure linéaire (14) dans des données d'image et leur tracé, comprenant les étapes :
- entrée (70) de données d'entraînement, comprenant au moins des données d'image avec au moins une structure linéaire (14) de tracé connu, pour laquelle sont spécifiées des valeurs de probabilité et des valeurs de déplacement (dₙ),
- comparaison (74) des valeurs de probabilité déterminées par le réseau neuronal convolutif selon l'une des revendications précédentes et des valeurs de déplacement (dₙ) aux valeurs de probabilité et aux valeurs de déplacement (dₙ) spécifiées,
- évaluation (78) des écarts avec une fonction de coût,
- modification de paramètres qui caractérisent le comportement du modèle dans le but (82) que, lors d'un traitement ultérieur de données d'entraînement par le réseau neuronal convolutif, l'évaluation par les fonctions de coût est probablement améliorée, et libération desdits paramètres si une valeur de précision déterminée atteint une valeur prédéfinie.

6. Procédé selon la revendication 5, **caractérisé en ce que** le réseau neuronal convolutif est entraîné pour estimer une valeur de réglage de longueur (dₙ) de la ligne (22) de longueur fixe par rapport à la structure linéaire (14).

7. Unité de commande d'un véhicule à moteur destinée à mettre en œuvre les étapes d'un procédé selon l'une des revendications précédentes.

8. Programme informatique, contenant des instructions lisibles par machine qui, lorsqu'elles sont exécutées sur un ou plusieurs ordinateurs, amènent le ou les ordinateurs à exécuter un procédé selon l'une des revendications 1 à 6.

9. Support de données lisible par machine et/ou produit à télécharger avec le programme informatique selon la revendication 8.

10. Ordinateur, équipé du programme informatique selon la revendication 8 et/ou du support de données lisible par machine et/ou du produit à télécharger selon la revendication 9.
